# FASCICULE DE BREVET EUROPEEN

(11) **EP 2 560 881 B1**
(45) Date de publication et mention de la délivrance du brevet: **06.06.2018**
(21) Numéro de dépôt: 11716874.0
(22) Date de dépôt: 19.04.2011
(51) Int. Cl.: B64G 1/58, C08L 97/00, F16L 59/04, C08K 7/04

(54) **MATERIAU DE PROTECTION THERMIQUE**
WÄRMESCHUTZMATERIAL
THERMAL PROTECTION MATERIAL

(30) Priorité: 22.04.2010 FR 1053087
(43) Date de publication de la demande: 27.02.2013
(73) Titulaire: ArianeGroup SAS, 75015 Paris (FR)
(72) Inventeur: PLAINDOUX, Cédric, 33200 Bordeaux (FR); BOUILLY, Jean-Marc, 33160 Saint Medard En Jalles (FR)
(74) Mandataire: Ipside
(86) Numéro de dépôt international: PCT/EP2011/056268
(87) Numéro de publication internationale: WO 2011/131691

(56) Documents cités:
- EP-A2- 1 482 163
- CH-A- 274 859
- GB-A- 879 411
- US-A- 2 087 942
- US-A- 4 031 059
- US-A- 5 064 868
- RECULUSA ET AL: "Formation of low-density carbon materials through thermal degradation of a cork-based composite", CARBON, ELSEVIER, OXFORD, GB, vol. 44, no. 7, 1 juin 2006 (2006-06-01), pages 1316-1320, XP005335608, ISSN: 0008-6223, DOI: DOI:10.1016/J.CARBON.2005.12.051

## Description

La présente invention concerne les matériaux de protection thermique, du type de ceux utilisés dans le domaine spatial. Ces matériaux sont destinés à protéger des structures ou des équipements contre des sollicitations thermiques très importantes, mais pendant des durées courtes ne dépassant pas quelques minutes.

Ces matériaux sont nécessaires de façon générale lors des phases de traversée de l'atmosphère des planètes, que ce soit au lancement ou à la rentrée.

Ils sont aussi utilisés comme protection envers les sources chaudes des lanceurs ou véhicules spatiaux, comme les systèmes de propulsion.

Les capacités naturelles d'isolation thermique du liège associées à un liant résistant à des hautes températures permettent son utilisation dans les industries aérospatiales et militaires pour de telles applications.

Il existe de nombreuses réalisations de matériaux de protection thermique et notamment le document US 2001/0036505 A1 concerne une composition poreuse comprenant des particules de liège et un liant, le document US 4 204 899 concerne la réalisation d'un matériau de protection thermique ablatif comprenant du liège finement divisé et une résine thermodurcissable et le document EP 1 493 788A1 décrit un matériau ablatif de protection thermique pour l'entrée atmosphérique d'un véhicule spatial comportant du liège et du silicone pouvant être projeté sur une surface.

Le document US2005/0096414 A1 décrit pour sa part un matériau de protection thermique comprenant une résine silicone, un catalyseur silicone, du liège, des écosphères de verre et un solvant silicone, la résine silicone étant présente dans une quantité de 65,3 à 72,3 pourcent massique.

Un matériau utilisé est aussi le matériau connu sous la marque NORCOAT du groupe EADS.

Ce matériau comprend 100 parties pondérales de liège 0,5 à 1 mm, 35 parties pondérales de résine phénolique, un fongicide et un ignifugeant.

L'objectif de la présente invention est de réaliser un matériau optimisé en termes de performance massique vis-à-vis d'une application à bas flux, de l'ordre de 0,1 MW/m² à 0,3 MW/m² et d'obtenir un matériau nettement moins dense que les matériaux actuellement utilisés dans ce domaine.

La présente invention vise en particulier comme application la protection contre l'échauffement aérothermique des lanceurs et la protection des parties arrières de véhicules de rentrée atmosphérique.

Plus précisément la présente invention propose un matériau de protection thermique d'une surface selon la revendication 1 annexée. Des modes de réalisation particuliers sont l'objet des revendications dépendantes.

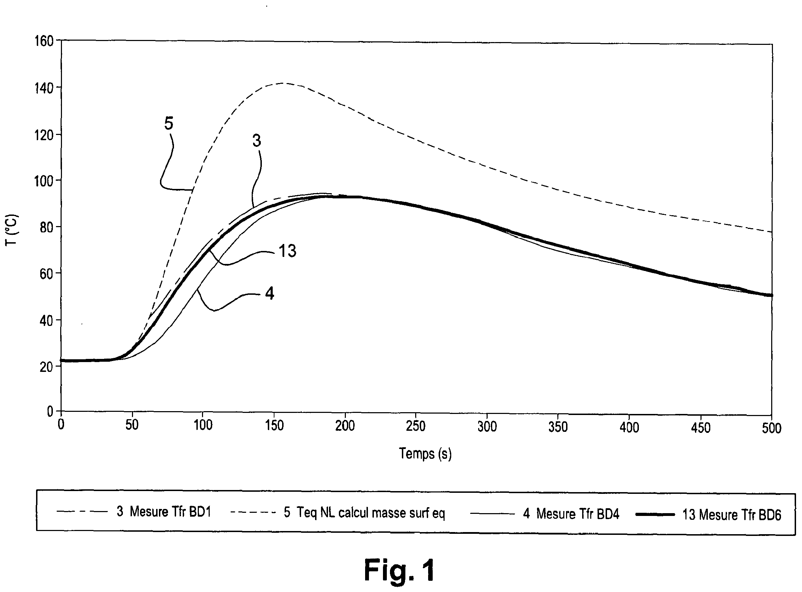

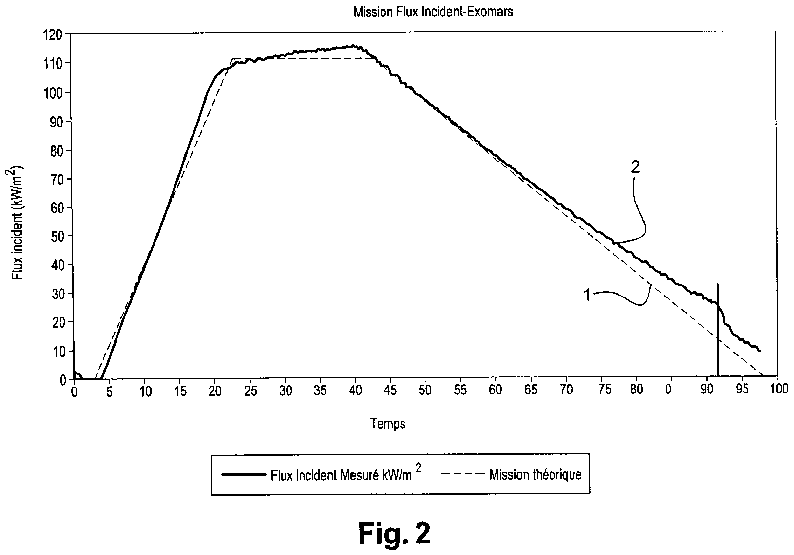

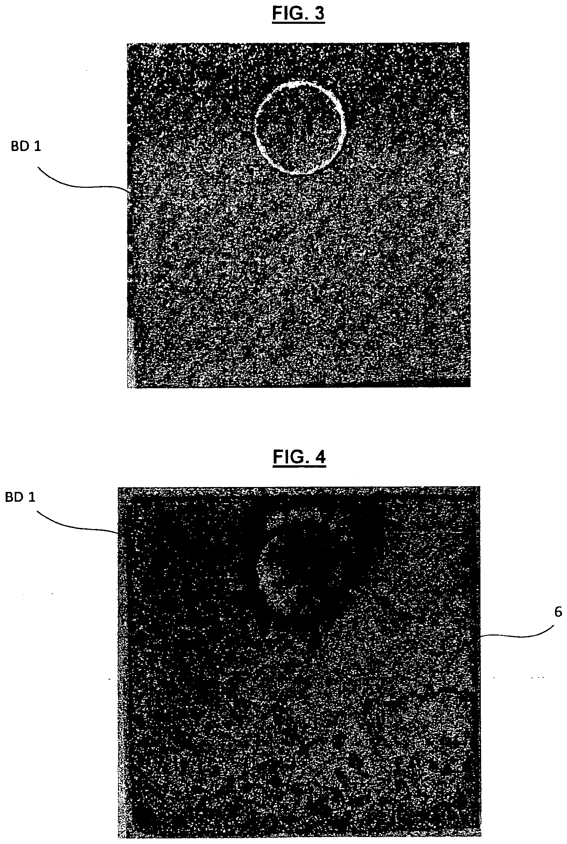

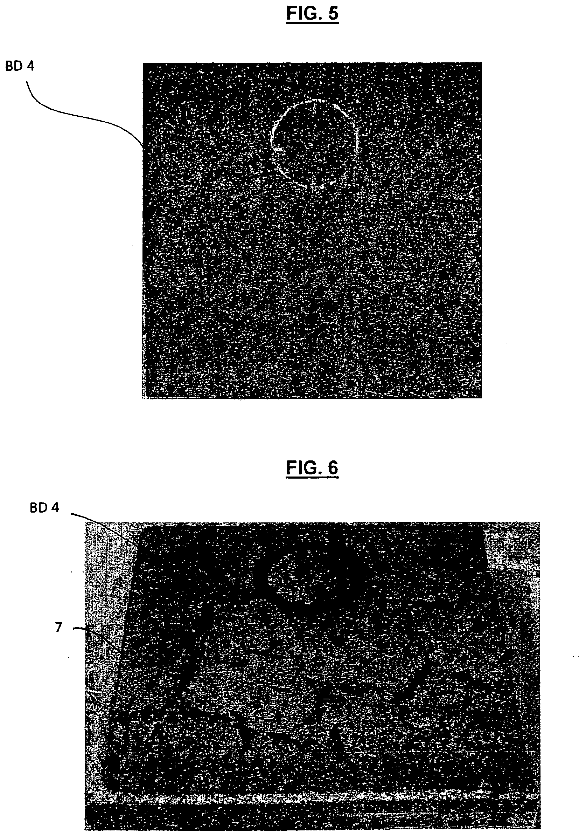

D'autres caractéristiques et avantages de l'invention seront apparents à la lecture de la description qui suit de modes de réalisation de l'invention accompagnée des figures qui représentent:
en figure 1: Les courbes de température d'une paroi froide recouverte des matériaux en essai lors d'une simulation de mission sous rayonnement infrarouge;
en figure 2: une courbe représentant le flux incident en fonction du temps appliqué lors de la simulation;
aux figures 3 et 4: des photos d'un premier matériau avant et après simulation de mission;
aux figures 5 et 6: des photos d'un second matériau avant et après simulation de mission.

Les matériaux de protection thermique utilisés dans le cadre des missions spatiales sont exposés à des sollicitations thermiques importantes pendant des durées courtes.

Il existe des matériaux à projeter sur les surfaces à protéger et des matériaux en plaques, la présente invention ayant trait aux matériaux en plaques.

Du fait de leur principe de fonctionnement, on ne peut caractériser ces matériaux, notamment ceux comportant du liège, selon des critères tels que leur conductivité thermique, leur capacité calorifique et leur diffusivité.

En outre on ne peut pas définir une température à laquelle ils sont soumis par contre on peut caractériser leur condition d'emploi par une loi exprimant le flux thermique appliqué en fonction du temps.

Un exemple de simulation d'une rentrée atmosphérique est représenté à la figure 2.

La consigne correspond à la courbe repère 1, la simulation réelle à la courbe repère 2.

Soumis au flux thermique dû au frottement d'une atmosphère, les matériaux de protection thermique réagissent de façon transitoire : ils s'échauffent par conduction thermique et rayonnement, transmettent la chaleur par leur diffusivité, et se décomposent.

Leur surface exposée au flux peut en outre s'éliminer peu à peu.

Ce dernier comportement dit ablatif est fondamental pour ce type de matériaux du fait qu'il permet de diminuer le flux de chaleur entrant.

Le comportement des matériaux lors de cette ablation doit être tel que le matériau qui se décompose donne un résidu qui demeure en surface du matériau, appelons cela une croute, il faut que cette croute reste en place malgré les sollicitations mécaniques que peut subir le matériau, vibration et frottement aérodynamique en particulier, de façon en particulier aussi à ne pas modifier le profil aérodynamique de l'objet lors de son parcours atmosphérique, il faut que cette croute soit homogène et le moins fissurée possible et il faut que la formation de cette croute s'accompagne du plus petit recul possible de la surface du matériau, de façon à conserver le pouvoir isolant du matériau.

Pour optimiser les matériaux et obtenir un bon comportement de ces derniers, de nombreux paramètres peuvent être modifiés, le but étant qu'en fin de mission du véhicule spatial l'augmentation de température de la face froide du matériau soit la plus faible possible pour une masse de protection la plus faible possible.

Un critère important d'optimisation des matériaux de protection thermique est leur masse du fait que l'optimisation des solutions techniques en terme de masse est un objectif permanent lorsque l'on construit un véhicule spatial ou un aéronef.

En effet, toute masse gagnée sur la structure se traduit soit par une possibilité plus grande de charge utile, soit une réduction de la masse de propergols à emporter et permet éventuellement une réduction de masse de la structure porteuse.

Les effets de la réduction de masse sont non seulement techniques mais également économiques. Réduire la masse du véhicule est déjà très important sur un lanceur mais l'est encore plus pour une sonde spatiale qui doit retourner sur une planète après un séjour dans l'espace.

Les missions pour lesquelles on a besoin de protection thermiques sont caractérisées en termes de flux thermique, de durée de la sollicitation thermique, et également en termes de charge thermique ce qui correspond au flux total accumulé pendant la mission.

Les matériaux concernés dans la présente invention sont ceux destinés à être utilisés pour des applications à bas flux.

Les applications à bas flux sont des applications pour lesquelles les flux thermiques sont de l'ordre de 0,1 MW/m² ou moins et moins de 10 MW/m², avec une charge totale thermique inférieure à 100 MJ/m². Ce qui correspond en particulier à des rentrées sur des petites planètes.

Ces faibles flux correspondent par exemple aux flux aérothermiques sur un lanceur, mais également au flux sur la partie arrière d'un véhicule de rentrée alors que les flux intenses sont rencontrés sur les boucliers avant de tels véhicules, ou en protection contre des flux de propulsion.

La présente invention se place en particulier dans le cas d'un flux thermique inférieur ou égal à 0,3 MW/m²

Dans le cadre de la recherche d'un matériau adapté pour des faibles flux thermiques il a été décidé de rechercher des solutions à fort pourcentage massique de liège pour réduire la densité du matériau.

Ces solutions emploient des fibres réfractaires et en particulier des fibres courtes de carbone.

Les fibres de carbone utilisées sont des fibres référencées T300 de la société Toray en 6000 filaments.

Ces fibres sont alors broyées pour les ramener à une longueur comprise entre 0,5 et 3 mm.

L'intérêt des fibres réfractaires est leur capacité à supporter de hautes températures notamment au dessus de 1000 ou 1500 °C.

Le liège employé est sous forme de granules et un liant est utilisé pour réaliser le matériau.

Le liant employé est une résine et, selon un premier mode de réalisation, il s'agit d'une résine à fort taux de coke.

Le taux de coke est la quantité de carbone qu'on obtient quand on chauffe un matériau à 1000°C en atmosphère neutre par exemple: azote.

Cette mesure se fait sur un appareil classique d'analyse thermique capable de monter à 1000°C sous azote.

Un fort taux de coke est un taux supérieur à 50%.

Il s'obtient avec des résines qui ont en général des cycles aromatiques, comme les phénoliques, mais aussi les furaniques, les brais et d'autres.

Selon un second mode de réalisation on utilise une résine époxy qui a un faible taux de coke.

Des échantillons ont été réalisés et dans le cadre de la présente invention Deux premiers matériaux utilisant de la résine phénolique appelés BD1 et BD6 et un second matériau utilisant de la résine époxy appelé BD4 ont été développés.

Quatre échantillons, BD1-1, BD1-2, BD6-1 et BD6-2 de test des premiers matériaux utilisant de la résine phénolique ont été réalisés et testés.

Les conditions ambiantes étaient une température de 21°C avec une hygrométrie de 54 %.

Les matériels utilisés comprennent un moule de laboratoire de 150x150 mm soit 378,7cc, un mélangeur pétrin de la société Kenwood de volume 8 litres, une étuve électrique 50-250°C et une balance électronique Viper de la société Mettler de capacité 3 Kg.

Les composants pour fabriquer le matériau d'essai BD1 sont décrits dans le tableau suivant:

| Composants | fournisseur | PCM | Masse gr |
|---|---|---|---|
| Granulés de liège 0,5/1 mm ignifugés | Amorim-Hpk | 63,13 | 66,92 |
| Résine phénolique | Exxon | 22,9 | 24,3 |
| Fibres de carbone | Apply-carbon | 13,09 | 13,9 |
| Fongicide | Borcher's | 0,88 | 0,93 |

L'objectif était d'atteindre une densité de l'ordre de 280 ± 10 kg/m3 pour une masse de l'ordre de 100 gr.

Les composants pour fabriquer le matériau d'essai BD6 sont décrits dans le tableau suivant:

| Composants | fournisseur | PCM | Masse gr |
|---|---|---|---|
| Granulés de liège 0,5/1 mm ignifugés | Amorim-Hpk | 68,15 | 76,4 |
| Résine phénolique | Exxon | 27,1 | 30,4 |
| Fibres de carbone | Apply-carbon | 3,8 | 4,26 |
| Fongicide | Borcher's | 0,95 | 1,06 |

L'objectif était d'atteindre une densité de l'ordre de 280 ± 10 kg/m3 pour une masse de l'ordre de 110 gr.

Le mode opératoire pour la réalisation du premier échantillon BD1-1 est décrit dans le tableau suivant:

| | |
|---|---|
| pesée des composants | 15 min |
| mélange résine et fongicide dans le bol du mélangeur | 1 min |
| ajout de 16 gr de liège et mélange 30 secondes à vitesse 1 | 30 sec |
| récupération de la résine sur le fond du bol | 30 sec |
| ajout et mélange du liège restant | 5 min |
| incorporation des fibres de carbone vitesse 1 | 4 min |
| homogénéisation à vitesse 2 | 1 min |
| remplissage du moule avec le mélange | 30 sec |
| compression jusqu'à fermeture du moule | 30 sec |
| pose et maintien du moule dans l'étuve à 120°C | 2h |
| refroidissement du moule à l'air libre | 2h |
| démoulage de l'éprouvette et contrôle | 5 min |

Pour le second échantillon BD1-2, l'incorporation des fibres de carbone à vitesse 1 a été rallongée à 6 min, l'homogénéisation à vitesse 2 a été rallongée à 2 min, le temps de maintien du moule dans l'étuve à 120°C a été rallongé pour atteindre 2h10 de même que le refroidissement du moule à l'air libre a été prolongé pour atteindre 2h30

Alors que le premier échantillon BD1-1 présentait des grumeaux après démoulage, l'échantillon BD1-2 présentait un aspect satisfaisant.

La masse des échantillons BD1-1 et BD1-2 démoulés est respectivement de 99,8 et 113,8 gr, leur masse finale étant respectivement de 100,7 et 113 gr.

Les matériaux BD6-1 et BD6-2 ont été réalisés respectivement selon les mêmes procédés et la masse de ces échantillons démoulés est respectivement de 112,1 et 113,2 grammes et leur aspect est satisfaisant.

Un second matériau appelé BD4 utilisant de la résine époxy a été mis au point.

Des échantillons d'essai ont été réalisés selon la formulation suivante:

| Composants: | Fournisseur | PCM | Masse gr |
|---|---|---|---|
| Granulés de liège 0,5/1 mm Ignifugés : | Amorim-Hpk | 55,83 | 59,2 |
| Résine Epoxy Part A | 3M | 10,56 | 11,2 |
| Résine Epoxy Part B | 3M | 10,56 | 11,2 |
| Acétate d'éthyle | Hpk | 10,79 | 11,4 |
| Fibres de carbone | Apply-carbon | 11,57 | 12,26 |
| Fongicide | Borcher's | 0,69 | 0,73 |

Comme pour le premier matériau, l'objectif était d'atteindre une densité de l'ordre de 280 ± 10 kg/m3 pour une masse de l'ordre de 100 gr.

Le mode opératoire pour la réalisation de deux échantillons BD4-1 et BD4-2 du second matériau est décrit dans le tableau suivant:

| | BD4-1 | BD4-2 |
|---|---|---|
| pesée des composants. | 15 min | |
| mélange part A et B résine époxy dans le bol du mélangeur. | 2 min | |
| ajout solvant et mélange jusqu'à dissolution complète | 5 min | |
| ajout de 16 gr de liège et mélangé à vitesse 1. | 30 sec | |
| récupération de la résine sur le fond du bol. | 30 sec | |
| ajout et mélange du liège restant. | 5 min | |
| incorporation des fibres de carbone vitesse 1. | 4 min | |
| homogénéisation à vitesse 2 | 1 min | |
| remplissage du moule avec le mélange | 30 sec | |
| compression jusqu'à fermeture du moule. | 30 sec | |
| maintien du moule dans l'étuve à 120°c | 2h | 2h50 |
| refroidissement du moule à l'air libre. | 2h | |
| démoulage de l'éprouvette et contrôle | 5 min | |

Les deux échantillons obtenus ont un aspect correct, la masse des échantillons BD4-1 et BD4-2 démoulés est respectivement de 92,2 et 92,5 gr, la masse finale des échantillons étant respectivement de 94,7 et de 95 gr.

La masse d'acétate dans les échantillons terminés manque du fait que l'acétate s'est évaporé lors de la polymérisation.

En résumé, les matériaux choisis ont des proportions de départ se situant dans le tableau suivant dans lequel les cases marquées X correspondent à une absence du composant concerné.

| Composants | BD1 (% massique) | BD4 (% massique) | BD6 (% massique) |
|---|---|---|---|
| Résine phénolique | 20-25 | X | 25-30 |
| Résine époxy | X | 18-23 | X |
| Acétate d'éthyle | X | 10-11 | X |
| Liège ignifugé | 60-65 | 50-60 | 65-70 |
| Fibres courtes de carbone | 12-15 | 10-15 | 3-5 |
| Fongicide | 0,7-0,9 | 0,6-0,8 | 0,8-1,0 |

On obtient donc des matériaux de faible densité comportant une part importante de liège.

Pour ce qui concerne les caractéristiques de densité, conductivité et diffusivité des matériaux par rapport au matériau commercialisé Norcoat, le tableau ci-dessous montre que les caractéristiques de conductivité et de diffusivité sont très proches de l'art antérieur alors que la densité des matériaux de la présente invention est nettement inférieure à la densité du matériau connu 0,3 par rapport à 0,45 pour le matériau NORCOAT.

| | BD1 | BD4 | BD6 | Norcoat commercialisé |
|---|---|---|---|---|
| Densité (matériau non dégazé) | 0.28 | 0.26 | 0.28 | 0,47 |
| Densité (matériau dégazé) | 0.26 | 0.24 | 0.26 | 0,45 |
| Conductivité 20°C(W/m.°C) | 0,16 | 0,13 | 0,15 | 0.1 |
| Diffusivité 20°C 10-6 m2/s | 0,17 | 0,17 | 0,17 | 0,083 |

Au final, même si le matériau BD4 présente un comportement thermique équivalent à celui du matériau BD1, on préférera le matériau BD1 : car le liant époxy du matériau BD4 donne une surface plus craquelée que celle de BD1.

Le matériau BD6 présente des résultats intermédiaires par rapport aux deux autres matériaux.

Pour ce qui concerne la densité du matériau on recherche une densité entre 0,25 et 0,35, avec une préférence entre 0,25 et 0,30.

Une adaptation de la densité est obtenue en remplissant plus ou moins le moule et en adaptant le pressage en fonction de la densité recherchée.

La figure 1 est une comparaison à iso masse des températures de paroi froide pour les différents matériaux, la paroi froide étant la paroi que l'on cherche à protéger.

Pour le matériau BD1, la température de paroi froide correspond à la courbe repère 3, pour le matériau BD6, la température de paroi froide correspond à la courbe repère 13 et pour le matériau BD4, la température de paroi froide correspond à la courbe repère 4.

La température obtenue avec le matériau NORCOAT de l'art antérieur correspond à la courbe repère 5.

Sur cette figure, on note que les nouveaux matériaux permettent à iso masse de gagner plus de 40°C sur la température en face froide de la protection par rapport au matériau antérieur courbe 5.

La figure 3 est une vue du matériau BD1 avant essai, la figure 4 une vue de ce même matériau après essai.

La différence d'aspect correspond à la création de la croute précitée, l'échantillon étant finement craquelé. Quelques fissures 6 sont présentes sans que cela remette en cause la protection offerte par le matériau.

La figure 5 est une vue du matériau BD4 avant essai et la figure 6 une vue de ce même matériau après essai.

Le matériau BD4 présente après essai des fissures 7 beaucoup plus importantes que le matériau BD1 et présente un aspect beaucoup plus craquelé que ce dernier matériau.

Le matériau BD6 présente un état de fissuration intermédiaire entre celui du matériau BD1 et celui du matériau BD4.

En résumé les matériaux BD1 et BD6 qui répondent à l'objectif de protection à masse réduite définissent une plage préférée pour le pourcentage massique de résine phénolique dans le mélange entre 20 et 30% et préférablement entre 22 et 28%.

Au delà de l'application initiale de réalisation de protections thermiques pour véhicules spatiaux, la présente invention peut trouver de nombreuses autres application comme protection thermique dans le domaine du transport ferroviaire, maritime, aéronautique ou terrestre; le domaine de l'industrie tels que les machines, le domaine de la construction comme les protections coupe feu.

## Revendications

1. Matériau ablatif, de protection thermique d'une surface d'un véhicule spatial, adapté à des faibles flux thermiques de 0,1 à 0,3 MW/m2, réalisé à partir d'un mélange comprenant une résine, des granules de liège et des fibres réfractaires, **caractérisé en ce que** la proportion de granules de liège dans le mélange correspond à un pourcentage massique de 60 à 70%, les fibres réfractaires étant des fibres courtes de carbone de longueur entre 0,5 et 3 mm dans un pourcentage massique de 1 à 15%, la densité du matériau étant d'une valeur de 0,25 à 0,35 et **en ce que** la résine est une résine à taux de coke de plus de 50%, soit la quantité de carbone obtenue par chauffage à 1000°C en atmosphère neutre telle que sous azote, dont le pourcentage massique dans le mélange est entre 10 et 35%.

2. Matériau ablatif de protection thermique selon la revendication 1 pour lequel la résine est une résine phénolique dont le pourcentage massique est entre 20 et 30%.

3. Matériau ablatif de protection thermique selon la revendication 2 comprenant 20 à 25% de résine phénolique, 60 à 65% de particules de liège ignifugé, 12 à 15% de fibres courtes de carbone et 0,7 à 0,9% de fongicide en proportions massiques et pour lequel la densité du matériau non dégazé est de 280 kg/m³±10%.

4. Matériau ablatif de protection thermique selon la revendication 2 comprenant 25 à 30% de résine phénolique, 65 à 70% de particules de liège ignifugé, 3 à 5% de fibres courtes de carbone et 0,8 à 1,0% de fongicide en proportions massiques et pour lequel la densité du matériau non dégazé est de 280 kg/m³±10%.

5. Matériau ablatif de protection thermique selon la revendication 1 ou 2 qui présente une densité entre 0,25 et 0,30.

6. Matériau ablatif de protection thermique selon l'une quelconque des revendications précédentes pour lequel les granules de liège sont des granules de 0,5 à 1 mm de diamètre.

7. Matériau ablatif de protection thermique selon la revendication 1 pour lequel la résine est une résine époxy dont le pourcentage massique est entre 20 et 30%.

## Patentansprüche

1. Ablatives Material zum thermischen Schutz einer Oberfläche eines Raumfahrzeugs, angepasst an schwache Wärmeströmungen von 0,1 bis 0,3 MW/m², realisiert ausgehend von einem Gemisch, umfassend ein Harz, Korkgranulat und feuerfeste Fasern, **dadurch gekennzeichnet, dass** der Anteil des Korkgranulats in dem Gemisch einem Massenprozentsatz von 60 bis 70 % entspricht, die feuerfesten Fasern kurze Kohlenstofffasern mit einer Länge zwischen 0,5 und 3 mm in einem Massenprozentsatz von 1 bis 15 % sind, die Dichte des Materials einen Wert von 0,25 bis 0,35 beträgt und dadurch, dass das Harz ein Harz mit einem Koksgehalt von über 50 % ist, was die Menge des durch Erhitzen auf 1000 °C in neutraler Atmosphäre, wie unter Stickstoff, erhaltenen Kohlenstoffs ist, wovon der Massenprozentsatz in dem Gemisch zwischen 10 und 35 % beträgt.

2. Ablatives Material zum thermischen Schutz gemäß Anspruch 1, wobei das Harz ein Phenolharz ist, dessen Massenprozentsatz zwischen 20 und 30 % liegt.

3. Ablatives Material zum thermischen Schutz gemäß Anspruch 2, umfassend in Massenanteilen 20 bis 25 % Phenolharz, 60 bis 65 % flammhemmende Korkpartikel, 12 bis 15 % kurze Kohlenstofffasern und 0,7 bis 0,9 % Fungizid, und wobei die Dichte des nicht entgasten Materials von 280 kg/m³ ± 10 % beträgt.

4. Ablatives Material zum thermischen Schutz gemäß Anspruch 2, umfassend in Massenanteilen 25 bis 30 % Phenolharz, 65 bis 70 % flammfeste Korkpartikel, 3 bis 5 % kurze Kohlenstofffasern und 0,8 bis 1,0 % Fungizid, und wobei die Dichte des nicht entgasten Materials 280 kg/m³ ± 10 % beträgt.

5. Ablatives Material zum thermischen Schutz gemäß Anspruch 1 oder 2, welches eine Dichte zwischen 0,25 und 0,30 aufweist.

6. Ablatives Material zum thermischen Schutz gemäß einem der vorstehenden Ansprüche, wobei das Korkgranulat aus Körnern mit einem Durchmesser von 0,5 bis 1 mm besteht.

7. Ablatives Material zum thermischen Schutz gemäß Anspruch 1, wobei das Harz ein Epoxidharz ist, von dem der Massenprozentsatz zwischen 20 und 30 % liegt.

## Claims

1. Ablative material for the thermal protection of the surface of a spacecraft, adapted to low heat fluxes of 0.1 to 0.3 MW/m2, made out of a mixture including a resin, cork granules and refractory fibers, **characterized in that** the proportion of cork granules in the mixture corresponds to a mass percentage of 60 to 70%, the refractory fibers being short carbon fibers of length between 0.5 and 3 mm, in a mass percentage of 1 to 15%, the material's density being between 0.25 to 0.35, and **in that** the resin is a resin with a coke content of more than 50%, meaning that the quantity of carbon obtained by heating at 1000°C in a neutral atmosphere, such as under nitrogen, whose mass percentage in the mixture is between 10 and 35%.

2. Ablative thermal protection material according to claim 1, wherein the resin is a phenolic resin whose mass percentage is between 20 and 30%.

3. Ablative thermal protection material according to claim 2, including 20 to 25% phenolic resin, 60 to 65% fireproof cork particles, 12 to 15% short carbon fibers and 0.7 to 0.9% fungicide in mass proportions and for which the non-degassed material density is 280 kg/m3±10%.

4. Ablative thermal protection material according to claim 2, including 25 to 30% phenolic resin, 65 to 70% fireproof cork particles, 3 to 5% short carbon fibers and 0.8 to 1.0% fungicide in mass proportions and for which the non-degassed material density is 280 kg/ m3±10%.

5. Ablative thermal protection material according to claim 1 or 2, that presents a density between 0.25 et 0.30.

6. Ablative thermal protection material according to any one of the preceding claims, for which the cork granules are granules 0.5 to 1mm in diameter.

7. Ablative thermal protection material according to claim 1 for which the resin is an epoxy resin whose mass percentage is between 20 and 30%.
